# EUROPEAN PATENT APPLICATION

(11) **EP 4 252 990 A1**
(43) Date of publication of application: **04.10.2023**
(21) Application number: 21898413.6
(22) Date of filing: 04.11.2021
(51) Int. Cl.: B29B 17/02, B09B 3/00

(54) **METHOD AND APPARATUS FOR DECOMPOSING AND RECYCLING THERMOSETTING RESIN COMPOSITE MATERIAL AND COMPOSITION UTILIZED THEREFOR**

(30) Priority: 25.11.2020 KR 20200160361; 02.11.2021 KR 20210149138
(71) Applicant: Catackh Co., Ltd., Hwaseong-si, Gyeonggi-do 18631 (KR)
(72) Inventor: JEONG, Jinho, Seoul 02715 (KR); KIM, Jongil, Hwaseong-si, Gyeonggi-do 18631 (KR)
(74) Representative: V.O.
(86) International application number: PCT/KR2021/015943
(87) International publication number: WO 2022/114587

(57) **Abstract**

Disclosed are a method and apparatus for decomposing and recycling a thermosetting resin composite material and a composition and kit utilized therefor, wherein the method comprises the steps of pretreating a thermosetting resin composite material in an aqueous formic acid solution or an aqueous hydrogen peroxide solution; and subjecting the pretreated thermosetting resin composite material to main treatment in a hydrogen peroxide solution or an aqueous formic acid solution, the aqueous solutions used in the pretreatment and the main treatment being different from each other. Unlike conventional chemical decomposition methods, the method according to the present invention can remarkably reduce decomposition time even in the condition of a low temperature and atmospheric pressure, can solve the problem that it is difficult to establish mass production facilities due to the odor (stink) of chemical solutions and the corrosion of the materials, and can maintain reaction performance even at reduced concentrations of the chemical solutions, allowing a great increase in the use number of the solutions. Accordingly, the production cost can be exceptionally reduced.

## Description

### Technical Field

The present specification relates to a method and an apparatus for decomposing and recycling a thermosetting resin composite material, and an aqueous solution composition utilized therefor. Specifically, the present specification relates to a method and an apparatus for decomposing and recycling a thermosetting resin composite material, which are capable of effectively decomposing and recycling particularly a composite material in which carbon fiber is impregnated and cured with a thermosetting resin using an environmentally friendly aqueous solution-based chemical reaction, and an aqueous solution composition utilized therefor.

### [National research and development project supporting the present invention]

[Task serial number] 1415160950
[Task number] 20183010025470
[Government department] Ministry of Trade, Industry and Energy
[Task management (specialized) institute] Korea Institute of Energy Technology Evaluation and Planning
[Research project] New renewable energy core technology development (R&D)
[Research task] Development of recovery/high value-added technology of fibers/organic materials for composite material blades for wind power generation using chemical decomposition and development of standards for disposal/reuse thereof
[Contribution ratio] 1/4
[Task performing institute] Korea Institute of Science and Technology
[Research period] October 01,2018 - March 31, 2019

### [National research and development project supporting the present invention]

[Task serial number] 1415163320
[Task number] 20183010025470
[Government department] Ministry of Trade, Industry and Energy
[Task management (specialized) institute] Korea Institute of Energy Technology Evaluation and Planning
[Research project] New renewable energy core technology development (R&D)
[Research task] Development of recovery/high value-added technology of fibers/organic materials for composite material blades for wind power generation using chemical decomposition and development of standards for disposal/reuse thereof
[Contribution ratio] 1/4
[Task performing institute] Korea Institute of Science and Technology
[Research period] April 01, 2019 - December 31, 2019

### [National research and development project supporting the present invention]

[Task serial number] 1415166564
[Task number] 20183010025470
[Government department] Ministry of Trade, Industry and Energy
[Task management (specialized) institute] Korea Institute of Energy Technology Evaluation and Planning
[Research project] New renewable energy core technology development (R&D)
[Research task] Development of recovery/high value-added technology of fibers/organic materials for composite material blades for wind power generation using chemical decomposition and development of standards for disposal/reuse thereof
[Contribution ratio] 1/4
[Task performing institute] Korea Institute of Science and Technology
[Research period] January 01, 2020 - December 31, 2020

### [National research and development project supporting the present invention]

[Task serial number] 1415169648
[Task number] 20012817
[Government department] Ministry of Trade, Industry and Energy
[Task management (specialized) institute] Korea Evaluation Institute of Industrial Technology
[Research project] Material parts technology development (R&D)
[Research task] Development of functional parts manufacturing technology to achieve cost reduction of 15% or more through upcycling of carbon fiber and intermediate materials
[Contribution ratio] 1/4
[Task performing institute] ENVIONEER Co., Ltd.
[Research period] August 01, 2020 - February 28, 2021

### Background Art

Thermosetting resins are widely used in, for example, composite materials such as carbon fiber reinforced plastics (CFRP) and glass fiber reinforced plastics (GFRP). The use amount of these composite materials is gradually increasing in all industrial fields including motor vehicle fields, aerospace fields, and new energy fields. In particular, as the use of these composite materials is expected to further increase in accordance with the need for weight saving of vehicles following the rapid spread of eco-friendly vehicles, the need for decomposition and recycling thereof is increasing.

However, due to their properties, thermosetting resins are poorly soluble in solvents once cured unless otherwise heat is applied, and this makes it difficult to recycle thermosetting resins. Representative thermosetting resins include polyurethane and epoxy resins.

Conventionally, as a method for treating these thermosetting resin composite materials, thermal decomposition and chemical decomposition methods are mainly used.

The thermal decomposition method has been used or is still being used by Japanese companies such as Toray and Teijin, or companies such as Adherent Technology (USA), Procotex (France), and ELG Carbon Fibre (UK). However, the thermal decomposition process requires a high temperature of 500°C or higher and is not environmentally friendly as substances harmful to the human body are produced, and thus use of the thermal decomposition process is gradually decreasing.

Meanwhile, as the chemical decomposition method, a method based on an organic solvent or a method of performing treatment under special process conditions such as a supercritical or semi-critical process is used.

However, there is still a problem that the method based on an organic solvent is also not environmentally friendly. In addition, as these organic solvent-based treatment solutions themselves, expensive solutions (for example, benzyl alcohol) are used, or reuse of the treatment solutions is often limited, and there is a problem that the production cost increases.

In the case of supercritical conditions and the like, there is a possibility of exposure to hazards during work since the process is performed under high pressure, and there is a disadvantage that the treatment is not economical since the cost for equipping and maintaining safety facilities and equipment increases.

Recently, technologies for performing the treatment under mild conditions excluding organic solvents as much as possible and using mainly water have been developed (Patent Literature 1).

However, in the case of the chemical method, the actual decomposition efficiency is not high, so the treatment time is long, and the chemical method cannot be practically used in a large-scale treatment process other than a laboratory level.

In addition, even under mild conditions, there is a problem in that handling of the chemical solutions used is greatly difficult, so there is a limit to the application of the chemical method in the actual field. For example, the stink (odor) of the chemical solution itself is too strong to work, and there is a problem of complaints from neighboring companies in a case where production equipment is installed and the process is performed even though facilities such as dust collectors and scrubbers are equipped, so these practical problems are hindering the application of the technology.

In constructing various facilities such as reactors, pumps, pipes, and valves, instrumentation and control equipment, and the like, there is a problem in that expensive materials (for example, titanium) are used in order to prepare for corrosiveness, or frequent replacement of the facilities or instrumentation and control equipment is required.

Accordingly, the inventors of the present invention have intensively studied a decomposition and recycling technology for thermosetting resin composite materials that is an aqueous solution-based decomposition method in which organic solvents are excluded, that enables decomposition under mild conditions as well as affords high decomposition efficiency and can be thus applied to large-scale treatment facilities, that does not cause strong odor and the like and thus affords excellent handling properties and usability, and that does not cause corrosion problems and thus rarely causes the need for replacement of related equipment, and have thus achieved the present invention.

### [Prior Art Literature]

[Patent Literature]
1. Korean Patent No. 1861095

### Disclosure

### Technical Problem

In exemplary embodiments of the present invention, an object of an aspect is to provide a method and an apparatus for decomposing and recycling a thermosetting resin composite material, a composition utilized therefor, and a kit including the composition, wherein the method enables decomposition under mild conditions of low temperature and atmospheric pressure, affords high decomposition efficiency, and can be thus applied to large-scale treatment facilities while the method is an aqueous solution-based decomposition method in which an organic solvent is not used.

In exemplary embodiments of the present invention, an object of another aspect is to provide a method and an apparatus for decomposing and recycling a thermosetting resin composite material, a composition utilized therefor, and a kit including the composition, wherein the method can remarkably improve handling and corrosion problems and can improve productivity by greatly increasing chemical reaction rates compared to the prior art.

In exemplary embodiments of the present invention, an object of another aspect is to provide a method and an apparatus for decomposing and recycling a thermosetting resin composite material, a composition utilized therefor, and a kit including the composition, wherein the method affords excellent reusability of aqueous solutions used in decomposition treatment of thermosetting resin composite materials and facilitates performance of treatment processes and control of treatment conditions.

### Solution to Problem

In exemplary embodiments of the present invention, there is provided a method for decomposing a thermosetting resin composite material, the method comprising the steps of: pretreating a thermosetting resin composite material in an aqueous formic acid solution or an aqueous hydrogen peroxide solution; and subjecting the pretreated thermosetting resin composite material to main treatment in a hydrogen peroxide solution or an aqueous formic acid solution, the aqueous solutions used in the pretreatment and the main treatment being different from each other.

In exemplary embodiments of the present invention, there is provided an apparatus for decomposing a thermosetting resin composite material, including a pre-impregnation tank for pre-impregnating a thermosetting resin composite material with a formic acid solution or an aqueous hydrogen peroxide solution; a pretreatment tank connected to the pre-impregnation tank, to which the thermosetting resin composite material obtained from the pre-impregnation tank is transported, and containing an aqueous formic acid solution or an aqueous hydrogen peroxide solution; and a main treatment tank connected to the pretreatment tank, to which the thermosetting resin composite material obtained from the pretreatment tank is transported, and containing an aqueous hydrogen peroxide solution or an aqueous formic acid solution, in which an aqueous solution contained in the pretreatment tank and an aqueous solution contained in the main treatment tank are different from each other.

In exemplary embodiments of the present invention, there is provided a kit for decomposing a thermosetting resin composite material, including a composition for pre-impregnation containing a formic acid solution or a hydrogen peroxide solution; a composition for pretreatment containing an aqueous formic acid solution or an aqueous hydrogen peroxide solution; and a composition for main treatment containing an aqueous hydrogen peroxide solution or an aqueous formic acid solution, in which an aqueous solution contained in the composition for pretreatment and an aqueous solution contained in the composition for main treatment are different from each other.

In exemplary embodiments of the present invention, there is provided a composition for decomposing a thermosetting resin composite material, in which a radical initiator is added to an aqueous hydrogen peroxide solution or an aqueous formic acid solution, preferably an aqueous hydrogen peroxide solution at 0.1 to 2 wt% or less.

### Advantageous Effects of the Invention

According to the exemplary embodiments of the present invention, unlike conventional chemical decomposition methods, it is possible to remarkably reduce decomposition time even in the condition of a low temperature and atmospheric pressure, can solve the problem that it is difficult to establish mass production facilities due to the odor (stink) of chemical solutions and the corrosion of the materials, and can maintain reaction performance even at reduced concentrations of the chemical solutions, allowing a great increase in the use number of the solutions. In addition, the reusability of aqueous solutions used in decomposition treatment of thermosetting resin composite materials is excellent, and it is easy to perform treatment processes and control treatment conditions. Accordingly, the production cost can be exceptionally reduced.

### Brief Description of Drawings

FIG. 1 is a table of results showing the corrosiveness of alternative solutions used in an exemplary embodiment of the present invention versus the corrosiveness of existing solutions;
FIGS. 2A and 2B are result photographs showing the improvement in reaction rate when alternative solutions are used in Experiment 1;
FIGS. 3A to 3G are photographs of CFRP before and after decomposition in Experiment 2;
FIGS. 4A to 4H are photographs of CFRP before and after decomposition in Experiment 3;
FIG. 5 is a result showing the reducing of decomposition time by pre-impregnation in Experiment 4;
FIG. 6 is a graph showing changes in concentration and pH of a solution (Solution D) used in an exemplary embodiment of the present invention depending on the heating (90°C) time when a buffer solution is added or not added; and
FIG. 7 is a graph showing the results of repeatedly performing decomposition while adjusting the concentration of a solution (Solution D) used in an exemplary embodiment of the present invention through addition of a buffer solution (heating temperature of 90°C, reaction time per one decomposition of about 5 hours).

### Mode for Invention

### Definition of terms

In the present specification, a thermosetting resin composite material refers to various composite materials containing thermosetting resins. For example, an epoxy resin composite material may contain an epoxy resin cured product and various fillers such as carbon fibers.

In the present specification, recycling means including a process of chemically treating a thermosetting resin composite material for decomposition.

The term "decomposition" used in the present specification and particularly in the claims may mean including decomposition and subsequent recycling together in addition to decomposition itself.

In the present specification, decomposition and recycling are defined as meaning including one or more of the decomposition process or the recycling process.

In the present specification, pre-impregnation means impregnating for a certain period of time at atmospheric pressure and room temperature at which substantial heat treatment is not considered to be performed. Here, the temperature at which substantial heat treatment is not performed may be room temperature at which any heating is not performed or 40°C or less at which substantial heat treatment is not considered to be performed, but is preferably room temperature. A thermosetting resin composite material is immersed in an aqueous solution, such as an aqueous formic acid solution or an aqueous hydrogen peroxide solution, at such a temperature and atmospheric pressure for a certain period of time.

In the present specification, pretreatment means immersing a thermosetting resin composite material in an aqueous solution such as an aqueous formic acid solution or an aqueous hydrogen peroxide solution, heated to a temperature of 80°C to 120°C, preferably less than 100°C, the boiling point of water, at atmospheric pressure for a certain period of time.

In the present specification, main treatment means immersing a thermosetting resin composite material subjected to the pretreatment in an aqueous solution such as an aqueous formic acid solution or an aqueous hydrogen peroxide solution, heated to a temperature of 80°C to 120°C, preferably less than 100°C, the boiling point of water, at atmospheric pressure for a certain period of time.

In the present specification, Solution A refers to an aqueous acetic acid solution. In the present specification, Solution B refers to an aqueous sodium hypochlorite solution.

In the present specification, Solution C refers to an aqueous formic acid solution.

In the present specification, Solution D refers to an aqueous hydrogen peroxide solution.

In the present specification, a radical initiator is a substance capable of generating radical species and promoting a radical reaction under mild conditions, and means one to be additionally added to an aqueous formic acid solution and/or an aqueous hydrogen peroxide solution used during the process of pre-impregnation, pretreatment and/or main treatment in exemplary embodiments of the present invention.

In the present specification, reusability of an aqueous solution refers to the property that an aqueous solution used in each process of pre-impregnation, pretreatment, and main treatment can be reused in the same process.

In the present specification, the concentration is expressed as a percentage of the weight of a substance to be added out of the total mass of a solution.

### Description of exemplary embodiments

Hereinafter, exemplary embodiments of the present invention will be described in detail.

The inventors of the present invention have recognized harsh process conditions of existing chemical decomposition methods of thermosetting resin composite materials, chemical solution handling problems, corrosion problems, and increases in chemical solution cost , intensively conducted studies to continuously improve the problems, and as a result, achieved the present invention.

In detail, when carbon fiber composite materials are chemically recycled by the most recently used method, for example, a method in which the thermosetting resin is decomposed by being subjected to pretreatment with an aqueous acetic acid solution and treatment with an aqueous solution containing sodium hypochlorite in order and then carbon fibers remaining in the solution are recovered, but this method has considerable problems in practical application.

In other words, the method has serious restrictions in handling the solutions and equipping the reaction facilities for workers due to the strong corrosiveness and odor of acetic acid (glacial acetic acid to be exact) itself, and the corrosiveness of sodium hypochlorite is more serious so as to cause rapid corrosion of alloys such as SUS316, which exhibits chemical resistance, and making equipping the reaction facilities difficult.

Accordingly, in exemplary embodiments of the present invention, in order to obtain high decomposition efficiency as well as improve the above-described problems such as handling properties and corrosiveness, step-by-step decomposition through pretreatment and main treatment is performed as well as alternative solutions (aqueous formic acid solution and aqueous hydrogen peroxide solution) are adopted, and a pre-impregnation process is additionally performed before pretreatment.

For example, pretreatment is performed using an aqueous formic acid solution or an aqueous hydrogen peroxide solution instead of acetic acid, and main treatment is performed using an aqueous hydrogen peroxide solution or an aqueous formic acid solution instead of sodium hypochlorite. From the viewpoint of reusability, mass productivity, handling properties such as reaction control, and decomposition efficiency, the aqueous solution used in the pretreatment and the aqueous solution used in the main treatment are composed to be different from each other.

Consequently, handling properties and corrosiveness are remarkably improved, and as will be described later, the chemical reaction rate is also significantly increased compared to that in the conventional method to increase the decomposition rate, and as a result, the productivity can be improved. In addition, as the reusability is high, mass productivity, which enables large-scale treatment, can also be improved.

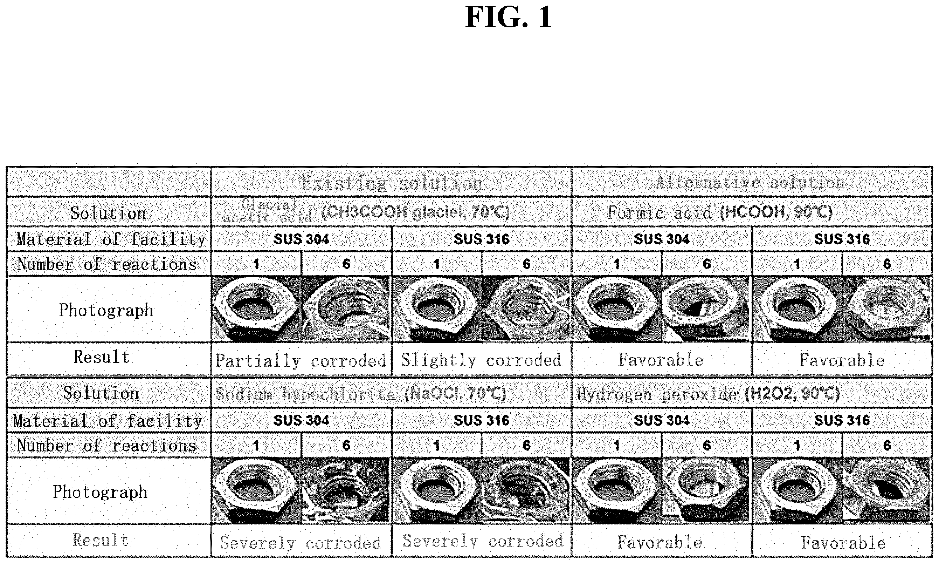

FIG. 1 is a table of results showing the corrosiveness of alternative solutions used in an exemplary embodiment of the present invention versus the corrosiveness of existing solutions.

As illustrated in FIG. 1, acetic acid and sodium hypochlorite, which are existing solutions, have problems that SUS 304 and SUS 316 alloys are both corroded as the number of reactions increases, but formic acid and hydrogen peroxide used in exemplary embodiments of the present invention do not have corrosion problems, and the treatment can be more quickly performed at a reaction temperature of below 100°C that is the boiling point of water.

When the overall performance and cost of the solution for pretreatment (Solution C: aqueous formic acid solution) and the solution used in main treatment (Solution D: aqueous hydrogen peroxide solution) in an exemplary embodiment of the present invention are compared to those of the existing solution for pretreatment (Solution A: aqueous acetic acid solution) and the solution used in main treatment (Solution B: aqueous sodium hypochlorite solution), the results are as shown in the following corrosiveness result table.

**[Table 1]**

| Alloy for treatment | Pretreatment | | Main treatment | |
|---|---|---|---|---|
| | Solution A | Solution C | Solution B | Solution D |
| SUS 304 | Damage to alloy | No damage to alloy | Damage to alloy | No damage to alloy |
| SUS 316 | Damage to alloy surface | No damage to alloy | Damage to alloy | No damage to alloy |

As described above, in exemplary embodiments of the present invention, in the case of using the alternative solutions (aqueous formic acid solution and aqueous hydrogen peroxide solution), it is easy to select materials constituting the reaction facilities as the corrosiveness is diminished compared to before, as well as the decomposition efficiency is excellent and a thermosetting resin composite material, which is poorly decomposed, can also be easily decomposed as will be described later.

Meanwhile, in an exemplary embodiment, the reaction times in pretreatment and main treatment may be further reduced by pre-impregnating the composite material with an aqueous formic acid solution or an aqueous hydrogen peroxide solution (within about 10 hours) before subjecting the composite material to the decomposition reaction.

Specifically, in exemplary embodiments of the present invention, a method for recycling a thermosetting resin composite material includes pretreating a thermosetting resin composite material in an aqueous formic acid solution or an aqueous hydrogen peroxide solution; and subjecting the pretreated thermosetting resin composite material to main treatment in a hydrogen peroxide solution or an aqueous formic acid solution. As described above, solutions different from each other are used as the solution for pretreatment and the solution for main treatment, respectively.

In an exemplary embodiment, the pre-impregnation is performed at room temperature and atmospheric pressure for 17 hours or less, preferably 10 hours or less depending on the kind of thermosetting resin composite material to be decomposed. For example, the pre-impregnation may be performed for more than 0 hours and less than 10 hours, 1 to 9 hours, 2 to 8 hours, 3 to 7 hours, or 4 to 6 hours. In a non-limiting example, the pre-impregnation may be performed at room temperature and atmospheric pressure for 10 hours or less, 9 hours or less, 8 hours or less, 7 hours or less, 6 hours or less, 5 hours or less, 4 hours or less, 3 hours or less, 2 hours or less, or 1 hour or less. The pre-impregnation may be performed for more than 0 hours, 1 hour or more, 2 hours or more, 3 hours or more, 4 hours or more, 5 hours or more, 6 hours or more, 7 hours or more, 8 hours or more, or 9 hours or more.

In an exemplary embodiment, the pretreatment may be performed at atmospheric pressure and 80°C to 120°C, preferably 80°C to less than 100°C, 85°C to 95°C, or 90°C for 1 to 6 hours.

In a non-limiting example, the temperature for pretreatment may be 80°C or higher, 85°C or higher, 90°C or higher, or 95°C or higher and may be 120°C or below, 115°C or below, 110°C or below, 105°C or below, preferably below 100°C, 95°C or below, 90°C or below, or 85°C or below.

In a non-limiting example, the time for pretreatment may be 1 hour or more, 1.5 hours or more, 2 hours or more, 2.5 hours or more, 3 hours or more, 3.5 hours or more, 4 hours or more, 4.5 hours or more, 5 hours or more, or 5.5 hours or more and may be 6 hours or less, 5.5 hours or less, 5 hours or less, 4.5 hours or less, 4 hours or less, 3.5 hours or less, 3 hours or less, 2.5 hours or less, 2 hours or less, or 1.5 hours or less.

In an exemplary embodiment, the main treatment may be performed at atmospheric pressure and 80°C to 120°C, preferably 80°C to less than 100°C, 85°C to 95°C, or 90°C for 1 to 3 hours.

In a non-limiting example, the temperature for main treatment may be 80°C or higher, 85°C or higher, 90°C or higher, or 95°C or higher and may be 120°C or below, 115°C or below, 110°C or below, 105°C or below, preferably below 100°C, 95°C or below, 90°C or below, or 85°C or below.

In a non-limiting example, the time for main treatment may be 1 hour or more, 1.5 hours or more, 2 hours or more, or 2.5 hours or more and may be 3 hours or less, 2.5 hours or less, 2 hours or less, or 1.5 hours or less.

In an exemplary embodiment, the formic acid concentration in the aqueous formic acid solution may be 50% or more and less than 100%, but formic acid is used at preferably 90% or less or less than 85% from the environmental point of view and at 50% or more from the viewpoint of reactivity.

In a non-limiting example, the formic acid concentration may be, for example, 50% to 90%. The formic acid concentration may be, for example, 90% or less, 85% or less, 80% or less, 75% or less, 70% or less, 65% or less, 60% or less, or 55% or less and may be 50% or more, 55% or more, 60% or more, 65% or more, 70% or more, 75% or more, 80% or more, or 85% or more.

In an exemplary embodiment, the hydrogen peroxide concentration in the aqueous hydrogen peroxide solution may be 20% or more and 50% or less, but hydrogen peroxide is preferably used at less than 35% from the environmental point of view and at 30% or more from the viewpoint of reactivity. There is a risk of explosion if the hydrogen peroxide concentration exceeds 50%.

In a non-limiting example, the hydrogen peroxide concentration may be 34.5% or less, 34% or less, 33.5% or less, 33% or less, 32.5% or less, 32% or less, 31.5% or less, 31% or less, or 30.5% or less.

In a non-limiting example, the hydrogen peroxide concentration may be 30% or more, 30.5% or more, 31% or more, 31.5% or more, 32% or more, 32.5% or more, 33% or more, 33.5% or more, or 34% or more.

Meanwhile, as can be seen in Experimental Examples described later, in aqueous solution-based decomposition, it has been confirmed that use of specific solutions in a specific sequence during pre-impregnation, pretreatment, and main treatment resulted in a large difference in the actual decomposition efficiency. The reason is not clear, but in the case of aqueous solution-based decomposition, it is considered that the kinds of chemicals used in each process of pre-impregnation, pretreatment and main treatment affect the decomposition mechanism and efficiency.

In addition, the reaction may proceed more efficiently by changing the order of treatment with the aqueous formic acid solution and the aqueous hydrogen peroxide solution depending on the type of thermosetting resin composite material to be decomposed and recycled.

For example, in the case of substances, which are greatly poorly decomposed, such as CFRP that constitutes the fuselage of an aircraft, it is preferable to use one having a decomposition sequence of relatively high efficiency in addition to the addition of a radical initiator described later.

Meanwhile, when a small amount of radical initiator is used together in one or more processes of the above-described pre-impregnation, pretreatment, or main treatment, in particular, one or more processes of the pretreatment or main treatment, the decomposition efficiency can be dramatically increased, for example, by 10% or more. Considering that it is difficult to increase only the decomposition efficiency while fixing other conditions in the chemical decomposition process of thermosetting resin composite materials, it is surprising that the decomposition efficiency can be increased by about 10% by only the addition of a small amount of radical initiator.

Although the mechanism has not been clearly identified, it is considered that in the process of pre-impregnation, pretreatment and/or main treatment using Solution C and/or Solution D, the radical initiator is involved in the radical reaction during the decomposition of thermosetting resin composite material to increase the decomposition efficiency.

In an exemplary embodiment, the radical initiator is preferably an azo compound, an organic peroxide, or the like from the viewpoint of increasing the decomposition efficiency.

As a non-limiting example, an azo compound that is a radical initiator may be azobisisobutyronitrile (AIBN).

As a non-limiting example, the organic peroxide that is a radical initiator may be benzoyl peroxide (BPO), acetyl peroxide, dilauryl peroxide, or the like.

In an exemplary embodiment, the radical initiator is preferably added to the aqueous formic acid solution or aqueous hydrogen peroxide solution at 0.01 to 2 wt% from the viewpoint of decomposition efficiency. When the radical initiator is used in an excessive amount of more than 2 wt%, a problem in controlling the chemical reaction may occur due to excessive reactivity.

In an exemplary embodiment, the decomposition process sequence by the method for decomposing a thermosetting resin composite material may include pre-impregnating a thermosetting resin composite material with an aqueous formic acid solution; pretreating the pre-impregnated thermosetting resin composite material in an aqueous hydrogen peroxide solution to which a radical initiator is added; and subjecting the pretreated thermosetting resin composite material to main treatment in an aqueous formic acid solution.

In an exemplary embodiment, the decomposition process sequence by the method for decomposing a thermosetting resin composite material may include pre-impregnating a thermosetting resin composite material with an aqueous formic acid solution; pretreating the pre-impregnated thermosetting resin composite material in an aqueous hydrogen peroxide solution; and subjecting the pretreated thermosetting resin composite material to main treatment in an aqueous formic acid solution to which a radical initiator is added.

In an exemplary embodiment, the decomposition process sequence by the method for decomposing a thermosetting resin composite material may include pre-impregnating a thermosetting resin composite material with an aqueous hydrogen peroxide solution; pretreating the pre-impregnated thermosetting resin composite material in an aqueous hydrogen peroxide solution to which a radical initiator is added; and subjecting the pretreated thermosetting resin composite material to main treatment in an aqueous formic acid solution.

In an exemplary embodiment, the decomposition process sequence by the method for decomposing a thermosetting resin composite material may include pre-impregnating a thermosetting resin composite material with an aqueous hydrogen peroxide solution; pretreating the pre-impregnated thermosetting resin composite material in an aqueous hydrogen peroxide solution; and subjecting the pretreated thermosetting resin composite material to main treatment in an aqueous formic acid solution to which a radical initiator is added.

In an exemplary embodiment, the decomposition process sequence by the method for decomposing a thermosetting resin composite material may include pre-impregnating a thermosetting resin composite material with an aqueous hydrogen peroxide solution; pretreating the pre-impregnated thermosetting resin composite material in an aqueous formic acid solution to which a radical initiator is added; and subjecting the pretreated thermosetting resin composite material to main treatment in an aqueous hydrogen peroxide solution.

In an exemplary embodiment, the decomposition process sequence by the method for decomposing a thermosetting resin composite material may include pre-impregnating a thermosetting resin composite material with an aqueous hydrogen peroxide solution; pretreating the pre-impregnated thermosetting resin composite material in an aqueous formic acid solution; and subjecting the pretreated thermosetting resin composite material to main treatment in an aqueous hydrogen peroxide solution to which a radical initiator is added.

Meanwhile, in an exemplary embodiment, in order to maintain continuous decomposition characteristics, the concentration and/or pH of the aqueous hydrogen peroxide solution may be adjusted to be maintained within certain ranges, and a buffer solution may be used to adjust the concentration and/or pH.

In a non-limiting example, as the reaction using an aqueous hydrogen peroxide solution proceeds during the pretreatment or main treatment, the concentration and pH fluctuate with a similar correlation, and a buffer solution may be used to compensate for this and maintain continuous decomposition characteristics. At this time, one or more of citric acid, tartaric acid, or phosphoric acid may be used as the buffer solution.

In a non-limiting example, compared to the concentration of aqueous hydrogen peroxide solution before the decomposition treatment, the concentration is preferably set to less than 35% but 30% or more.

In exemplary embodiments, the decomposition rate in the method for decomposing a thermosetting resin composite material may be measured by thermogravimetric analysis (TGA) by which the organic matter decomposition rate can be confirmed, and the decomposition rate by thermogravimetric analysis may be 90% or more, 91% or more, 92% or more, 93% or more, 94% or more, 95% or more, 96% or more, or 97% or more, and is particularly preferably 98% or more or 99% or more, most preferably 100%.

The decomposition rate is regarded to be closer to 100% as the organic/inorganic residue is closer to 0% when the finally recovered (after drying) carbon fiber (reclaimed carbon fiber) is analyzed by TGA.

Meanwhile, the apparatus for decomposing a thermosetting resin composite material according to exemplary embodiments of the present invention may include a pretreatment unit (or pretreatment zone) in which a thermosetting resin composite material is pretreated in a formic acid solution or a hydrogen peroxide solution; and a main treatment unit (or main treatment zone) in which the pretreated thermosetting resin composite material is subjected to main treatment in a hydrogen peroxide solution or a formic acid solution. The solution for pretreatment and the solution for main treatment are composed of solutions different from each other.

In an exemplary embodiment, the apparatus may further include a pre-impregnation unit (or pre-impregnation zone) in which a thermosetting resin composite material is pre-impregnated with a formic acid solution or a hydrogen peroxide solution before pretreatment.

In an exemplary embodiment, the apparatus for decomposing a thermosetting resin composite material may include a pre-impregnation tank for pre-impregnating a thermosetting resin composite material with a formic acid solution or an aqueous hydrogen peroxide solution; a pretreatment tank, connected to the pre-impregnation tank by, for example, a conveyor belt, to which the thermosetting resin composite material obtained from the pre-impregnation tank is transported, and containing an aqueous formic acid solution or an aqueous hydrogen peroxide solution; and a main treatment tank, connected to the pretreatment tank by, for example, a conveyor belt, to which the thermosetting resin composite material obtained from the pretreatment tank is transported, and containing an aqueous hydrogen peroxide solution or an aqueous formic acid solution.

Meanwhile, in exemplary embodiments of the present invention, a kit for decomposing a thermosetting resin composite material may be provided.

The kit includes a composition for pre-impregnation containing a formic acid solution or a hydrogen peroxide solution; a composition for pretreatment containing an aqueous formic acid solution or an aqueous hydrogen peroxide solution; and a composition for main treatment containing an aqueous hydrogen peroxide solution or an aqueous formic acid solution. The aqueous solution in the composition for pretreatment and the aqueous solution in the composition for main treatment are composed to be different from each other.

In an exemplary embodiment, the kit may further include a radical initiator in an aqueous hydrogen peroxide solution or an aqueous formic acid solution, particularly preferably in an aqueous hydrogen peroxide solution. Here, the radical initiator is preferably added to the aqueous hydrogen peroxide solution or aqueous formic acid solution at 0.01 to 2 wt% or less.

### [Examples]

Hereinafter, specific Examples according to exemplary embodiments of the present invention will be described in more detail. However, the present invention is not limited to the following Examples, and various forms of Examples may be implemented within the scope of the appended claims, and it will be understood that the following Examples are intended only to ensure that this disclosure is complete and to facilitate the practice of the invention to those skilled in the art.

### [Experiment 1]

In Experiment 1, it was investigated whether the decomposition efficiency in the case of using alternative solutions, Solution C and Solution D, was improved compared to that in the case of using the existing Solutions A and B.

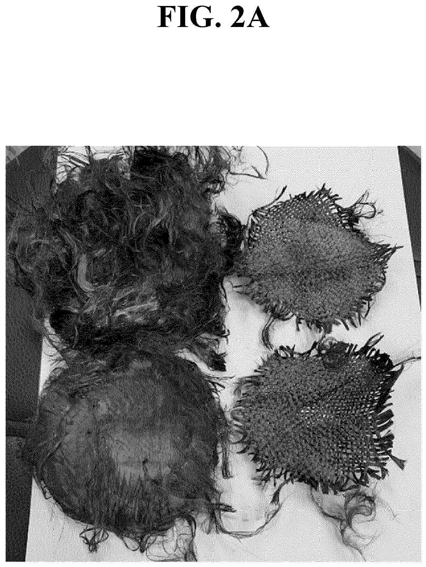

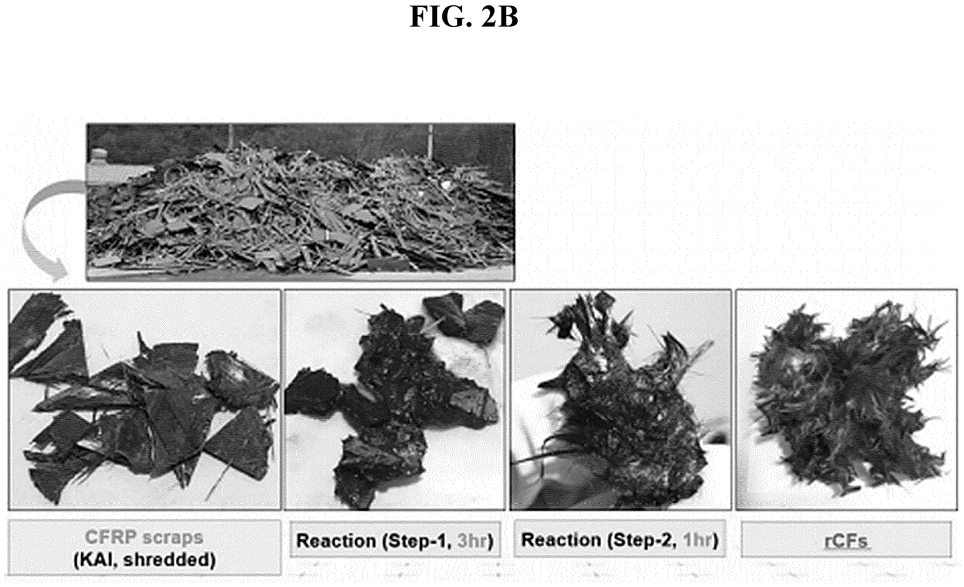

First, aircraft CFRP scraps (shredded product) were used as a raw material before decomposition. For reference, a photograph of CFRP scraps before decomposition is illustrated in FIG. 2.

As solutions used in decomposition, an aqueous glacial acetic acid solution (Solution A - 99.9%) and an aqueous sodium hypochlorite solution (Solution B - 12%) were used, respectively. In addition, an aqueous formic acid solution (Solution C - 80%) and an aqueous hydrogen peroxide solution (Solution D - 34.5%) were used, respectively. Each of Solution A, Solution B, Solution C, and Solution D was used at a volume ratio of the solution to CFRP of 20:1.

For reference, the volume ratio of the solution to the composite material to be treated in the pre-impregnation, pretreatment and main treatment may be 1 (composite material volume): 10 (solution volume) or more, for example, 1 (composite material volume): 10 (solution volume) to 1 (composite material volume):30 (solution volume), but is preferably as low as possible in terms of cost reduction.

FIGS. 2A and 2B are result photographs showing the improvement in reaction rate when alternative solutions are used in Experiment 1. FIG. 2A illustrates the result photograph in the case of the existing solutions, and FIG. 2B illustrates the result photograph in the case of the present Example.

As illustrated in FIGS. 2A and 2B, it was difficult to remove reaction residues even when the sum of the reaction times for pretreatment (Step-1) and main treatment (Step-2) exceeded 10 hours in the case of the existing solutions described above (see FIG. 2A), but it was possible to easily remove the reaction residues when the sum of the reaction times for pretreatment (Step-1) and main treatment (Step-2) was 4 hours in exemplary embodiments of the present invention (see FIG. 2B).

### [Experiment 2]

In Experiment 2, changes in decomposition efficiency were measured in the cases of changing the decomposition sequence of pre-impregnation based on the sequence of using Solution C for pre-treatment and Solution D for main treatment, changing the time for pretreatment and the time for main treatment, and additionally using a radical initiator.

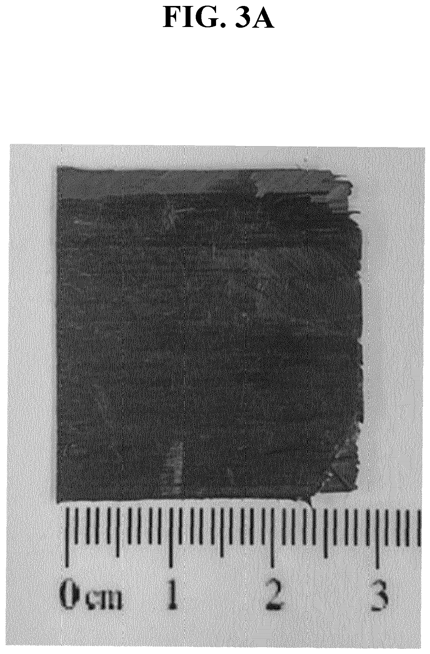

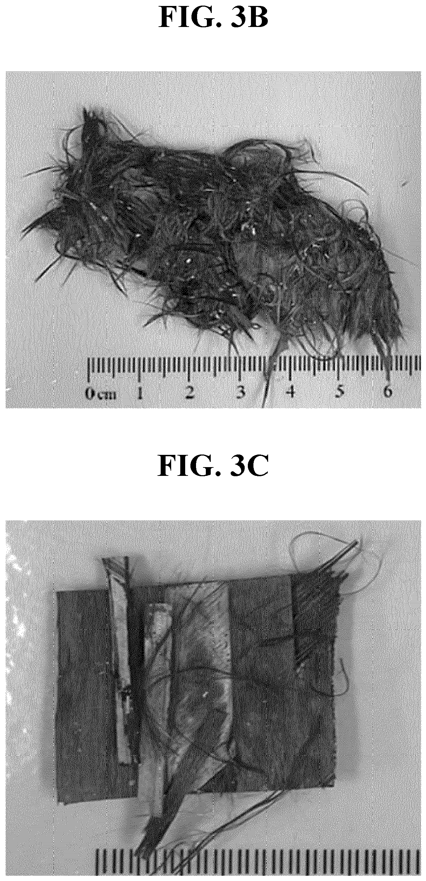

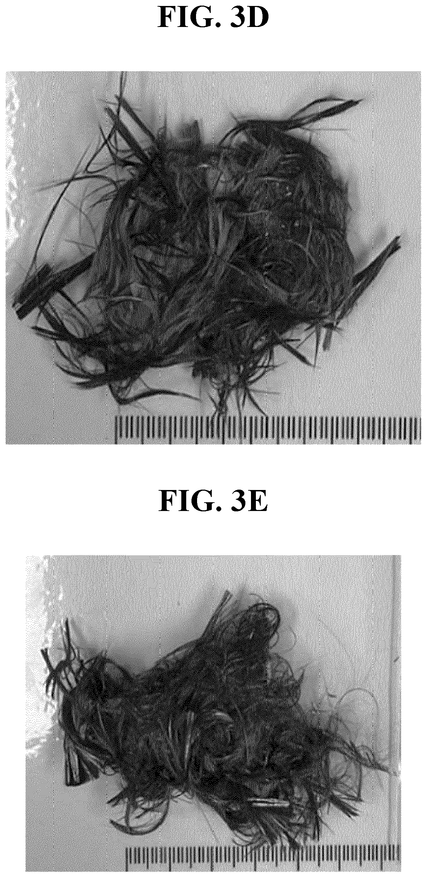

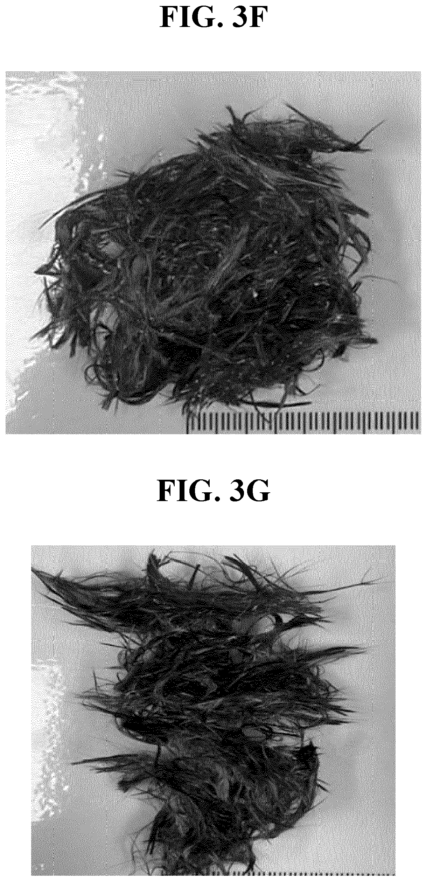

First, a CFRP plate for aircraft was used as a raw material before decomposition. The size was 30 × 30 × 5 mm (1 g). For reference, FIG. 3A is a photograph of the CFRP plate before decomposition.

As solutions used in decomposition, an aqueous formic acid solution (Solution C - 80%) and an aqueous hydrogen peroxide solution (Solution D - 34.5%) were used, respectively. Each of Solution C and Solution D was used at a volume ratio of the solution to CFRP of 20: 1.

Pre-impregnation was carried out at room temperature and atmospheric pressure for 17 hours when performed, and both pretreatment and main treatment were performed at atmospheric pressure and 90°C.

As a radical initiator, AIBN was used at 1 wt% for each aqueous solution.

The decomposition efficiency was measured by thermogravimetric analysis (TGA). For reference, SCINCO TGA N-1000 was used as the analyzer for TGA analysis, the temperature range was RT to 800°C, EGA was used as the furnace, the heating speed was 10°C, and N₂ atmosphere was adopted. The same TGA method is adopted in the experiments.

The sequence of each Example, whether a radical initiator was added, and the decomposition rate in Experiment 2 are as follows. In the respective sequences, all conditions other than those indicated below were the same. Meanwhile, photographs after decomposition in the following Examples 1 to 6 are illustrated in FIGS. 3B to 3G, respectively.

**[Table 2]**

| Example | Pre-impregnation | Pretreatment (hours) | Main treatment (hours) | Decomposition rate (TGA, %) | Note |
|---|---|---|---|---|---|
| 1 | D | C(3) | D(1) | 90.3 | Pre-impregnation + basic conditions |
| 2 | Absent | C(3) | D(1) | 80.1 | Basic conditions |
| 3 | D | C(4) | D(2) | 100.0 | Comparison to Example 1 according to change in process time |
| 4 | Absent | C(4) | D(2) | 81.8 | Comparison to Example 2 according to change in process time |
| 5 | D | C(3)+initiator | D(1) | 92.0 | Comparison to Example 1 according to addition of radical initiator in pretreatment process |
| 6 | D | C(3) | D(1)+initiator | 100.0 | Comparison to |
| | | | | | Example 1 according to addition of radical initiator in main treatment process |

As can be seen from the above, when comparing Examples 1 and 2 to each other, the decomposition efficiency is improved by about 10% when the other conditions are the same and pre-impregnation with Solution D is further performed.

Comparing Examples 1 and 3 to each other, when the time for pretreatment is increased by 1 hour and the time for main treatment is increased by 1 hour, the decomposition efficiency reaches 100% in the sequence D->C->D. However, when pre-impregnation with Solution D is not performed, the decomposition efficiency is as low as 81.8% even though the time for pretreatment is increased by 1 hour and the time for main treatment is increased by 1 hour. Hence, it can be seen that even if the decomposition time is increased in the sequence of pretreatment with Solution C and main treatment with Solution D, there is a benefit from increasing the decomposition time when pre-impregnation with Solution D is performed. For reference, since increasing the decomposition time is not desirable from the viewpoint of cost and decomposition and recycling efficiency of thermosetting resin composite materials, it is necessary to achieve high decomposition efficiency while reducing the decomposition time as much as possible. From this point of view, the sequence of Example 6 described later shows significantly surprising results.

In other words, compared to Example 1, a radical initiator is added to the solution for pretreatment in Example 5, and the decomposition efficiency is increased by about 2% in this case. On the other hand, compared to Example 1, a radical initiator is added to the solution for main treatment in Example 6, and the decomposition efficiency is dramatically increased to 100% in this case.

These results show that adding a radical initiator particularly to Solution D greatly increases the decomposition efficiency when the process of D->C->D is performed, and this result is consistent with the result that adding a radical initiator to Solution D further increases the decomposition efficiency in Experiment 3 below.

Meanwhile, in Experiment 2, as a result of examining the difference according to whether an initiator (AIBN) is added during pre-impregnation, it has been confirmed that the specimen is further softened in the case of pre-impregnation with Solution D + radical initiator.

### [Experiment 3]

In Experiment 3, changes in decomposition efficiency were measured in the cases of changing the decomposition sequence of pre-impregnation based on the sequence of using Solution D for pre-treatment and Solution C for main treatment and additionally using a radical initiator.

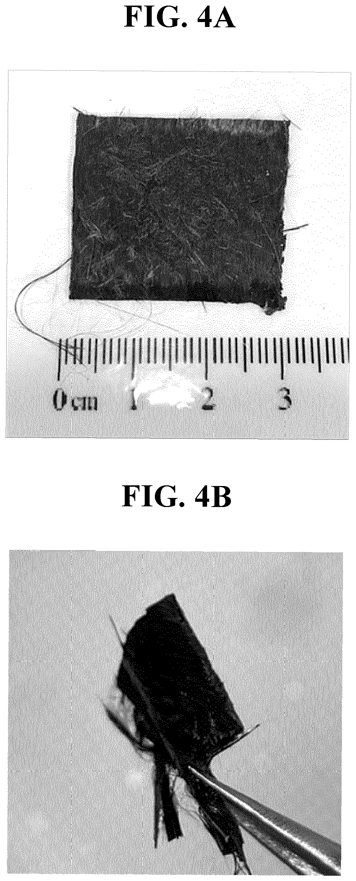

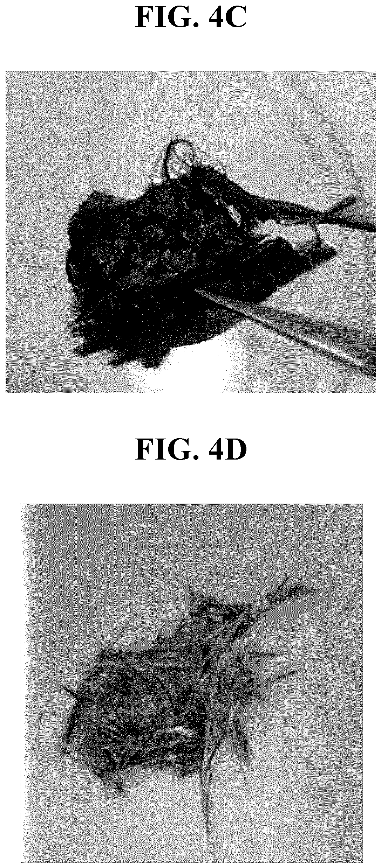

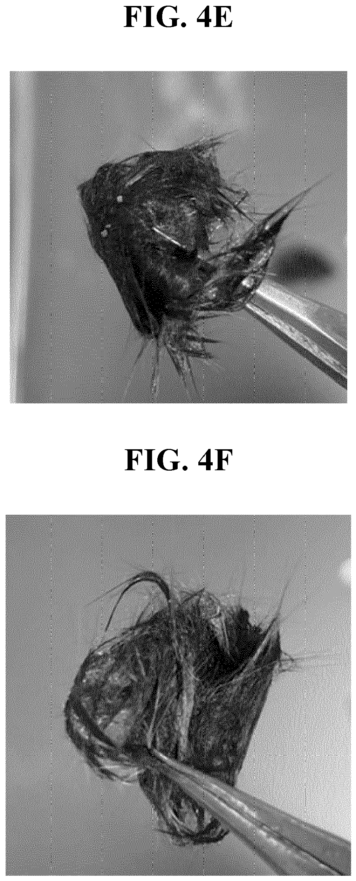

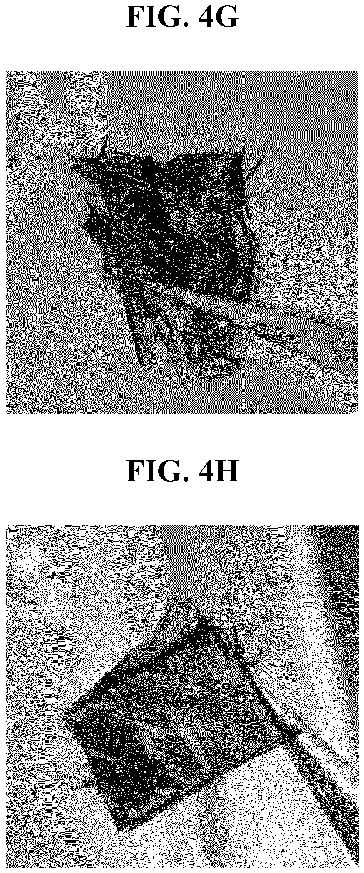

First, a CFRP plate for aircraft was used as a raw material before decomposition. The size was 30 × 30 × 5 mm (1 g). For reference, FIG. 4A is a photograph of the CFRP plate before decomposition.

As solutions used in decomposition, an aqueous formic acid solution (Solution C - 80%) and an aqueous hydrogen peroxide solution (Solution D - 34.5%) were used, respectively. Each of Solution C and Solution D was used at a volume ratio of the solution to CFRP of 20: 1.

Pre-impregnation was carried out at room temperature and atmospheric pressure, and both pretreatment and main treatment were performed at atmospheric pressure and 90°C.

As a radical initiator, AIBN was used at 1 wt% for each aqueous solution.

The decomposition efficiency was measured by thermogravimetric analysis (TGA) as in Experiment 2.

The sequence of each Example, whether a radical initiator was added, and the decomposition rate in Experiment 3 are as follows. In the respective sequences, all conditions other than those indicated below were the same.

**[Table 3]**

| Example | Pre-impregnation | Pretreatment (6 hours) | Main treatment (1 hour) | Decomposition rate (TGA, %) | Note |
|---|---|---|---|---|---|
| 1 | C | D | C | 89.3 | No radical initiator added |
| 2 | D | D | C | 89.3 | |
| 3 | C | D + initiator | C | 99.7 | Pretreatment D + radical initiator |
| 4 | D | D + initiator | C | 97.9 | |
| 5 | C | D | C + initiator | 99.5 | Main treatment C + radical initiator |
| 6 | D | D | C + initiator | 89.6 | |

As can be seen from the above, the decomposition rate is significantly increased (by about 10%) when a radical initiator is added for the pretreatment and main treatment of the decomposition reaction, respectively. For reference, in the case of CFRP recycling, CFRP is required to be decomposed by preferably 95% or more, more preferably 98% or more.

Meanwhile, in the case of adding a radical initiator, higher decomposition efficiency is acquired by a specific sequence in the decomposition reaction by pre-impregnation and pretreatment and the decomposition reaction by main treatment. In other words, the decomposition efficiency is higher in the case of Example 3 (C->D + initiator->C) than in the case of Example 5 (C->D->C + initiator).

A significantly higher increase in decomposition efficiency is acquired in the case of Example 4 (D->D + Initiator->C) than in the case of Example 6 (D->D->C + Initiator).

As can be seen from the above, the addition of a radical initiator results in an increase in decomposition efficiency, and the addition of a radical initiator in pretreatment results in a greater increase in decomposition efficiency overall particularly in the case of using Solution D as the solution for pretreatment and Solution C as the solution for main treatment.

In addition, when Solution D is used as the solution for pretreatment and Solution C is used as the solution for main treatment as above, the highest decomposition efficiency of 99.7% is acquired under the same conditions, particularly in the case of a sequence in which pre-impregnation with Solution C is performed. For reference, FIGS. 4B to 4H are photographs of regenerated carbon fibers after decomposition according to Examples 1 to 6 in Experiment 2, respectively.

Meanwhile, in this experiment as well, as a result of examining the difference according to whether an initiator (AIBN) is added during pre-impregnation, it has been confirmed that the difference in effect is insignificant in the case of pre-impregnation with Solution C + radical initiator but the specimen is further softened in the case of pre-impregnation with Solution D + radical initiator.

Taken together, it is considered that a greater synergistic effect is acquired when a radical initiator is added to Solution D.

### [Experiment 4]

Meanwhile, the reaction can proceed more efficiently by changing the decomposition sequence according to the properties of raw material (waste CFRP), and the reaction times in pre-treatment and main treatment can be further reduced by pre-impregnating the raw material with Solution C or Solution D (room temperature and atmospheric pressure, 17 hours in Experiment 4) before the raw material is subjected to the decomposition reaction.

In Experiment 4, the CFRP of a hydrogen tank was cut and was immediately decomposed without being shredded. First, the CFRP was pre-impregnated with an aqueous formic acid solution at room temperature for 17 hours. The CFRP was then pretreated in an aqueous hydrogen peroxide solution for 4 hours.

After the pretreatment, the CFRP was introduced into an aqueous formic acid solution and decomposed for 1 hour to complete the treatment.

The concentrations of the solutions used were an aqueous formic acid solution (Solution C - 80%) and an aqueous hydrogen peroxide solution (Solution D - 34.5%), respectively. Each of Solution C and Solution D was used at a volume ratio of the solution to CFRP of 20: 1.

The pretreatment and main treatment were both performed at atmospheric pressure and 90°C.

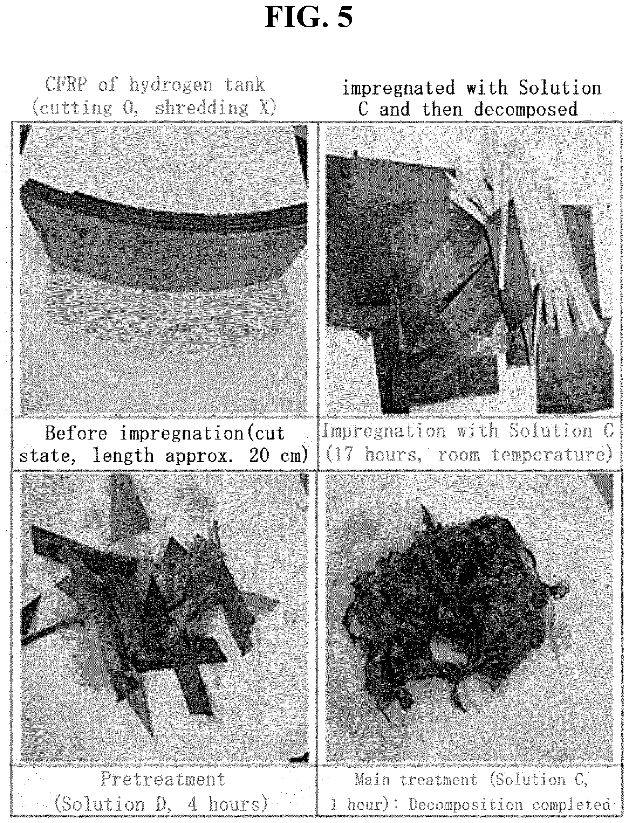

FIG. 5 is a result showing the reducing of decomposition time by pre-impregnation in Experiment 4. FIG. 5A is a photograph when pre-impregnation is performed, and FIG. 5B is a photograph when pre-impregnation is not performed. As a result of TGA, it has been confirmed that organic matter does not remain when pre-impregnation is performed but 20% of organic matter remains when pre-impregnation is not performed.

### [Experiment 5]

In Experiment 5, a buffer solution (pH = 2.45) was initially added (1.17%) to compensate for the pH, and the concentration was maintained at a constant level accordingly to continuously maintain the decomposition characteristics.

In 100 ml of water, 0.21 g of citric acid, 0.8 g of tartaric acid, and 0.5 g of phosphoric acid were stirred and dissolved, and then the solution was diluted to a total solution volume of 900 ml, and stirred once more to prepare a buffer solution. The pH of the buffer solution was 2.45. After mixing, this buffer solution was added to Solution D so that the pH reached 1.165.

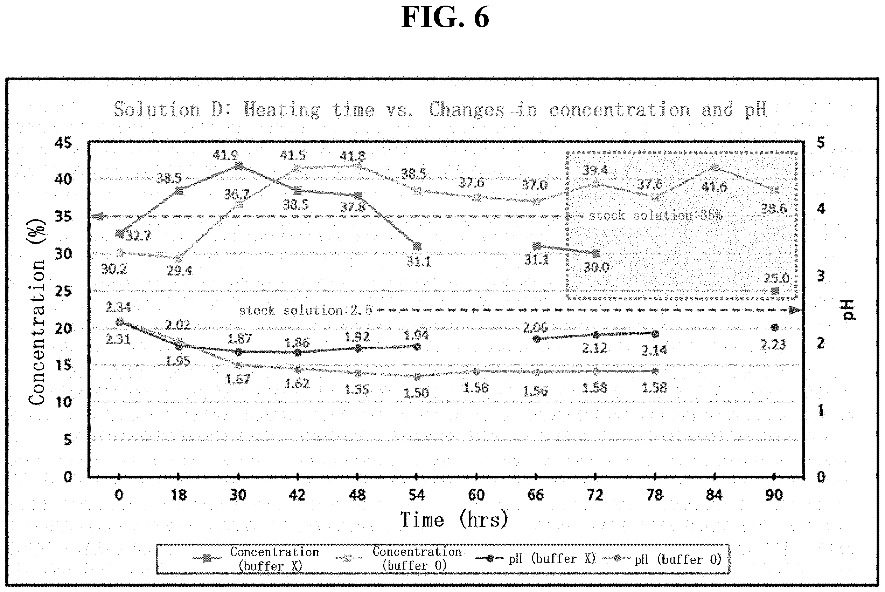

FIG. 6 is a graph showing changes in concentration and pH of a solution (Solution D) used in an exemplary embodiment of the present invention depending on the heating (90°C) time when a buffer solution is added or not added.

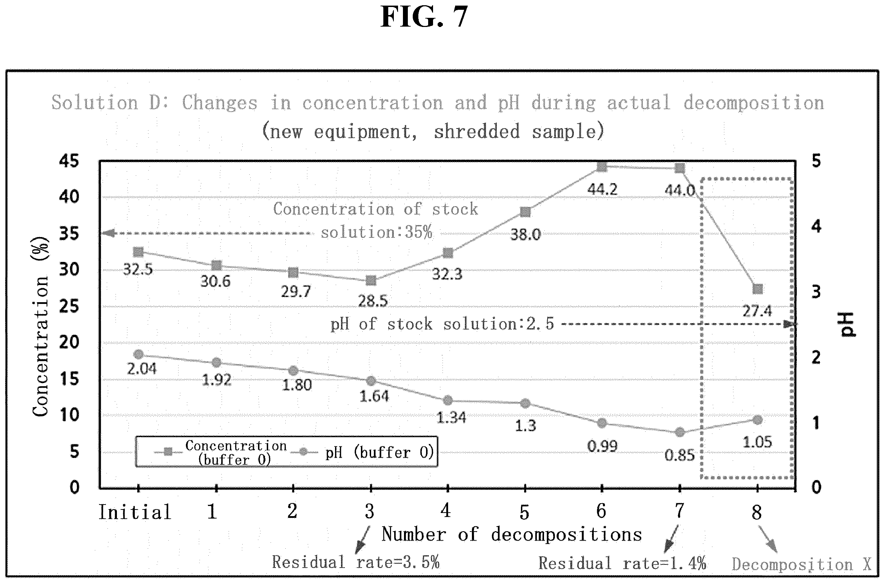

FIG. 7 is a graph showing the results of repeatedly performing decomposition while adjusting the concentration of a solution (Solution D) used in an exemplary embodiment of the present invention through addition of a buffer solution (heating temperature of 90°C, reaction time per one decomposition of about 5 hours).

As can be seen from FIG. 7, the solution of the exemplary embodiments of the present invention can be repeatedly used in decomposition and exhibits excellent aqueous solution reusability, and can be repeatedly used up to 7 times.

In FIG. 7, the residual rate is the residual rate of organic matter by TGA. In FIG. 7, the increase in buffer concentration after the third time is due to the use of buffer solution after the third time. As can be seen from FIG. 7, the decomposition rate decreases as the number of repetitions increases, but the residual rate of organic matter is insignificant until the 7th time, but the decomposition itself does not occur from the 8th time.

### Industrial Applicability

The present specification relates to a method and an apparatus for decomposing and recycling a thermosetting resin composite material, which are capable of effectively decomposing and recycling a composite material in which carbon fiber is impregnated and cured with a thermosetting resin using an environmentally friendly aqueous solution-based chemical reaction, and an aqueous solution composition utilized therein.

## Claims

1. A method for decomposing a thermosetting resin composite material, comprising the steps of:
pretreating a thermosetting resin composite material in an aqueous formic acid solution or an aqueous hydrogen peroxide solution; and
subjecting the pretreated thermosetting resin composite material to main treatment in a hydrogen peroxide solution or an aqueous formic acid solution,
wherein an aqueous solution used in the pretreatment and an aqueous solution used in the main treatment are different from each other.

2. The method for decomposing a thermosetting resin composite material according to claim 1,
wherein a radical initiator is added to an aqueous solution used in one or more of the pretreatment or main treatment.

3. The method for decomposing a thermosetting resin composite material according to claim 1,
wherein the method further comprises a step of pre-impregnating a thermosetting resin composite material with a formic acid solution or a hydrogen peroxide solution before pretreatment.

4. The method for decomposing a thermosetting resin composite material according to claim 3, further comprising the steps of:
pre-impregnating a thermosetting resin composite material with an aqueous formic acid solution;
pretreating the pre-impregnated thermosetting resin composite material in an aqueous hydrogen peroxide solution to which a radical initiator is added; and
subjecting the pretreated thermosetting resin composite material to main treatment in an aqueous formic acid solution.

5. The method for decomposing a thermosetting resin composite material according to claim 3, further comprising the steps of:
pre-impregnating a thermosetting resin composite material with an aqueous formic acid solution;
pretreating the pre-impregnated thermosetting resin composite material in an aqueous hydrogen peroxide solution; and
subjecting the pretreated thermosetting resin composite material to main treatment in an aqueous formic acid solution to which a radical initiator is added.

6. The method for decomposing a thermosetting resin composite material according to claim 3, further comprising the steps of:
pre-impregnating a thermosetting resin composite material with an aqueous hydrogen peroxide solution;
pretreating the pre-impregnated thermosetting resin composite material in an aqueous hydrogen peroxide solution to which a radical initiator is added; and
subjecting the pretreated thermosetting resin composite material to main treatment in an aqueous formic acid solution.

7. The method for decomposing a thermosetting resin composite material according to claim 3, further comprising the steps of:
pre-impregnating a thermosetting resin composite material with an aqueous hydrogen peroxide solution;
pretreating the pre-impregnated thermosetting resin composite material in an aqueous hydrogen peroxide solution; and
subjecting the pretreated thermosetting resin composite material to main treatment in an aqueous formic acid solution to which a radical initiator is added.

8. The method for decomposing a thermosetting resin composite material according to claim 3, further comprising the steps of:
pre-impregnating a thermosetting resin composite material with an aqueous hydrogen peroxide solution;
pretreating the pre-impregnated thermosetting resin composite material in an aqueous formic acid solution to which a radical initiator is added; and
subjecting the pretreated thermosetting resin composite material to main treatment in an aqueous hydrogen peroxide solution.

9. The method for decomposing a thermosetting resin composite material according to claim 3, further comprising the steps of:
pre-impregnating a thermosetting resin composite material with an aqueous hydrogen peroxide solution;
pretreating the pre-impregnated thermosetting resin composite material in an aqueous formic acid solution; and
subjecting the pretreated thermosetting resin composite material to main treatment in an aqueous hydrogen peroxide solution to which a radical initiator is added.

10. The method for decomposing a thermosetting resin composite material according to claim 3,
wherein the pre-impregnation is performed for 6 to 17 hours at room temperature and atmospheric pressure.

11. The method for decomposing a thermosetting resin composite material according to claim 1,
wherein the pretreatment is performed for 2 to 6 hours at atmospheric pressure and a temperature of 80°C to 95°C.

12. The method for decomposing a thermosetting resin composite material according to claim 1, wherein
the main treatment is performed for 1 to 3 hours at atmospheric pressure and a temperature of 80°C to 95°C.

13. The method for decomposing a thermosetting resin composite material according to claim 1,
wherein a formic acid concentration in an aqueous formic acid solution is 50% to 90%, and a hydrogen peroxide concentration in an aqueous hydrogen peroxide solution is 30% to 50%.

14. The method for decomposing a thermosetting resin composite material according to claim 2,
wherein a radical initiator is added to the aqueous formic acid solution or aqueous hydrogen peroxide solution at 0.1 to 2 wt%.

15. The method for decomposing a thermosetting resin composite material according to claim 2,
wherein the method affords a decomposition rate of 98% or more by thermogravimetric analysis (TGA).

16. The method for decomposing a thermosetting resin composite material according to claim 1,
wherein a buffer solution is added in the pretreatment or main treatment step to adjust decomposition characteristics.

17. An apparatus for decomposing a thermosetting resin composite material, comprising:
a pre-impregnation tank for pre-impregnating a thermosetting resin composite material with a formic acid solution or an aqueous hydrogen peroxide solution;
a pretreatment tank, connected to the pre-impregnation tank, to which the thermosetting resin composite material obtained from the pre-impregnation tank is transported, and containing an aqueous formic acid solution or an aqueous hydrogen peroxide solution; and
a main treatment tank, connected to the pretreatment tank, to which the thermosetting resin composite material obtained from the pretreatment tank is transported, and containing an aqueous hydrogen peroxide solution or an aqueous formic acid solution,
wherein aqueous solutions contained in the pretreatment tank and the main treatment tank are different from each other.

18. A kit for decomposing a thermosetting resin composite material, comprising:
a composition for pre-impregnation containing a formic acid solution or a hydrogen peroxide solution;
a composition for pretreatment containing an aqueous formic acid solution or an aqueous hydrogen peroxide solution; and
a composition for main treatment containing an aqueous hydrogen peroxide solution or an aqueous formic acid solution,
wherein an aqueous solution contained in the composition for pretreatment and an aqueous solution contained in the composition for main treatment are different from each other.

19. The kit for decomposing of a thermosetting resin composite material according to claim 18,
wherein the kit further comprises a radical initiator to be added to an aqueous hydrogen peroxide solution or aqueous formic acid solution.

20. A composition for decomposing a thermosetting resin composite material, wherein a radical initiator is added to an aqueous hydrogen peroxide solution or an aqueous formic acid solution at 0.1 to 2 wt% or less.
